# EUROPÄISCHE PATENTSCHRIFT

(11) **EP 2 538 107 B1**
(45) Veröffentlichungstag und Bekanntmachung des Hinweises auf die Patenterteilung: **07.05.2014**
(21) Anmeldenummer: 11170606.5
(22) Anmeldetag: 20.06.2011
(51) Int. Cl.: F16F 1/373, F16F 3/12, F16F 15/08

(54) **Halter zur Aufnahme und Halterung einer schwingungs- und/oder schockempfindlichen Komponente**
Holder for storing and holding an oscillation and/or shock-sensitive component
Support pour la réception et la retenue d'un composant sensible aux oscillations et/ou aux chocs

(43) Veröffentlichungstag der Anmeldung: 26.12.2012
(73) Patentinhaber: Siemens Aktiengesellschaft, 80333 München (DE)
(72) Erfinder: Morlock, Andreas, 76327 Pfinztal (DE)

(56) Entgegenhaltungen:
- EP-A1- 1 612 798
- EP-A2- 1 939 885
- DE-A1- 4 017 885
- DE-B3-102005 055 178
- US-A- 2 448 281
- US-A- 4 549 602
- US-A1- 2002 044 416
- US-A1- 2002 167 792

## Beschreibung

Die Erfindung betrifft einen Halter zur Aufnahme und Halterung einer schwingungs- und/oder schockempfindlichen Komponente, wobei der Halter mit einer Tragplatte versehen ist.

An elektronische Komponenten, z. B. Komponenten in Form von Festplatten- oder DVD-Laufwerken eines so genannten Industrie-PCs, werden hohe Anforderungen im Hinblick auf hohe Schwingungs- bzw. Vibrationsbelastungen einerseits und bezüglich hoher Schockbelastungen andererseits gestellt. Beispielsweise schreiben Spezifikationen für derartige Industrie-PCs vor, dass während ihres Betriebs eine Beschleunigung von ca. 10 m/s² bei Frequenzen bis zu 60 Hz (Schwingungs- bzw. Vibrationsbelastung) und darüber hinaus kurzzeitig eine Beschleunigung von ca. 50 m/s² (Schockbelastung) möglich sein müssen, ohne dass Komponenten des Industrie-PCs beschädigt werden. Um derartige Anforderungen erfüllen zu können, sind daher geeignete Maßnahmen erforderlich.

Aus der DE 10 2005 055 178 B3 ist ein Halter bekannt, wobei Maßnahmen vorgesehen sind, mittels derer eine hohe Dämpfung einer quaderförmigen schwingungs- und/oder schockempfindlichen Komponente in Form eines Speicherlaufwerks erzielt wird. Zwischen einer Tragplatte und Aufnahmemitteln des Speicherlaufwerks sind vertikal zur Tragplatte zweigeteilte elastische Elemente angeordnet, wobei jeweils abgebogene Laschen der Aufnahmemittel zwischen den beiden Teilen der elastischen Elemente vorgesehen sind.

In der europäischen Patentanmeldung 10160150.8 wird eine Anordnung mit einer schwingungs- und/oder schockempfindlichen Komponente und einer Tragplatte zur Aufnahme und Halterung der Komponente, z. B. einer Komponente in Form eines Speicherlaufwerks, vorgeschlagen, wobei Maßnahmen vorgesehen sind, welche in unterschiedlichen Schwingungsrichtungen ein im Wesentlichen gleiches Dämpfungsverhalten erzielen. Die Tragplatte weist an zwei gegenüberliegenden senkrecht zur Tragplatte angeordneten Seitenwänden jeweils zwei horizontal beabstandete Bohrungen auf, wobei ferner an den Ecken der Tragplatte senkrecht zu dieser Fahnen angeordnet sind, die jeweils mit einer weiteren Bohrung versehen sind. Jede Fahne bildet mit einer der Seitenwände, die an die jeweilige Fahne angrenzt, einen Winkel, wobei an der Komponente elastische Elemente derart angeordnet sind, dass diese in die Bohrungen eingreifen. Nachteilig ist der hohe konstruktive und fertigungstechnische Aufwand für die Verwirklichung dieser Maßnahmen.

Ein Halter zur Aufnahme und Halterung einer Komponente ist aus der US 4,549,602 bekannt.

Der vorliegenden Erfindung liegt die Aufgabe zugrunde, einen Halter der eingangs genannten Art zu schaffen, mittels welchem ein gutes Dämpfungsverhalten sowohl im Rahmen einer Schwingungs- als auch einer Schockbelastung erzielt wird.

Diese Aufgabe wird durch die im kennzeichnenden Teil des Anspruchs 1 angegebenen Maßnahmen gelöst.

Vorteilhaft ist, dass mittels des Profils getrennte Federhärten für kleine und große Auslenkungen der Komponente aus einer Ruhestellung, beispielsweise eine Komponente in Form eines Festplattenlaufwerks, vorgesehen werden können. In eine Richtung dämpft ein höher angeordneter Teil der mehrstufigen Auflagefläche der Profilschiene kleine Auslenkungen (Schwingungen), die übrige Auflagefläche dagegen größere Auslenkungen, welche im Rahmen von Schockbelastungen vorkommen können. Es kann also für diese Dämpfungsrichtung eine "eigene" Federhärte bzw. Federkonstante oder Federsteifigkeit "eingestellt" werden, was durch die besondere Gestaltung des Profils erzielt wird.
Der höher angeordnete Teil der Auflagefläche ist beispielsweise als innerer Abschnitt der Auflagefläche und die übrige Auflagefläche als äußerer Abschnitt dieser Auflagefläche ausgebildet, wobei im Folgenden der Einfachheit halber und zur besseren Unterscheidung diese Formulierungen "innerer bzw. äußerer Abschnitt der Auflagefläche" für den höher angeordneten Teil der Auflagefläche bzw. für die übrige Auflagefläche gewählt werden.

Darüber hinaus werden unter der Formulierung "an zwei gegenüberliegenden Kanten" nicht zwingend zwei gegenüberliegende Außenkanten der Tragplatte verstanden, vielmehr sind darunter auch zwei gegenüberliegende parallel zueinander verlaufende Strecken oder Bereiche im Inneren dieser Tragplatte zu verstehen, die von den Außenkanten beabstandet sind.

Schwingungen bzw. Vibrationen werden in einer Richtung gedämpft, indem der innere Abschnitt der Auflagefläche der Profilschiene, welcher eine erste Federhärte repräsentiert, in die entsprechende Innenseite des Dämpfungselementes bis zu einer ersten Eindringtiefe eindringt. Dabei wird diese erste Eindringtiefe durch einen Übergang von dem inneren zu dem äußeren Abschnitt der Auflagefläche verkörpert. Im Rahmen einer Schockbelastung dringt bis zu einer zweiten Eindringtiefe der innere Abschnitt weiter und zusätzlich der äußere Abschnitt, welcher eine zweite Federhärte darstellt, in die Innenseite des Dämpfungselementes ein.

In einer Ausgestaltung der Erfindung ist vorgesehen, dass der Bereich eines Übergangs von dem inneren zu dem äußeren Abschnitt der Auflagefläche im Wesentlichen kehlförmig ausgerundet ist. Diese kehlförmige Ausrundung bzw. der Radius dieser Ausrundung repräsentiert einen "weichen" Übergang zwischen der ersten und der zweiten Federhärte, d. h. einen "weichen" Übergang zwischen einer weichen und einer harten Federung.

In weiteren Ausgestaltungen der Erfindung ist vorgesehen, dass der Querschnitt der jeweiligen Profilschiene im Wesentlichen T-förmig oder kreuzförmig ausgebildet ist. Derartige Profilschienen sind fertigungstechnisch mittels eines elastischen Plattenmaterials leicht herstellbar.

Gemäß den im Anspruch 5 angegebenen Maßnahmen sind die Dämpfungselemente im Wesentlichen U- oder C-förmig ausgebildet und jede Profilschiene weist mehrere mehrstufige Auflageflächen auf, die jeweils zum Abstützen an einer der Innenseiten des jeweiligen Dämpfungselements vorgesehen sind. Dadurch wird ermöglicht, jeweils eine Dämpfung in Richtung der jeweiligen Innenseite sowie für jede dieser Richtungen eine erste und eine zweite Federhärte zu verwirklichen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 2: Schnittdarstellungen eines mit einer Profilschiene versehenen Dämpfungselements,
- Figur 3: einen Halter zur Aufnahme und Halterung eines Speicherlaufwerks,
- Figur 4: einen Halter mit einem Speicherlaufwerk,
- Figur 5: ein mit einer Profilschiene versehenes Dämpfungselement und
- Figuren 6 bis 8: Querschnitte von Profilschienen.

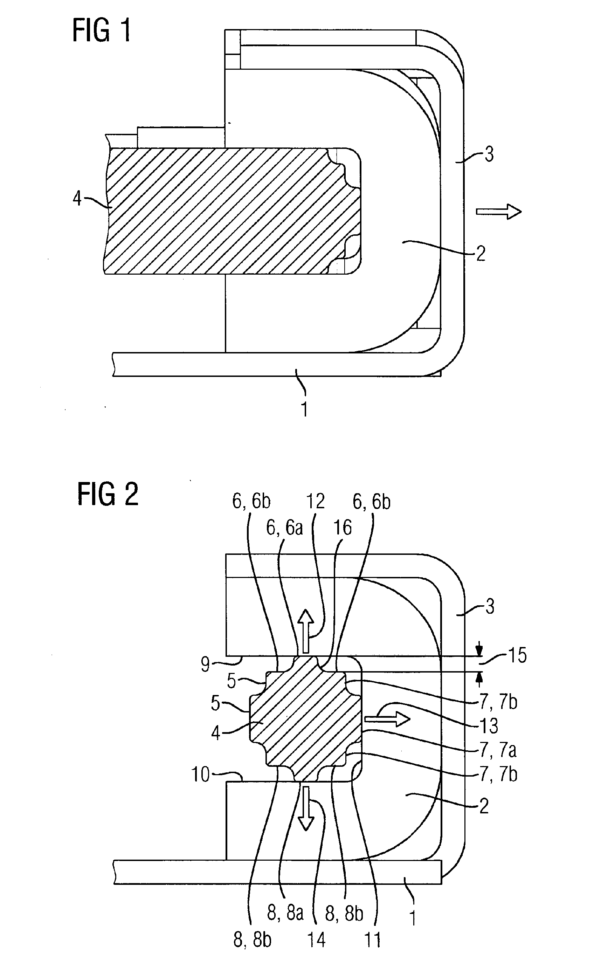

Die in den Figuren 1 bis 8 gleichen Teile sind mit gleichen Bezugszeichen versehen.

In den Schnittdarstellungen gemäß den Figuren 1 und 2 ist mit 1 eine Tragplatte eines Halters für ein Speicherlaufwerk bezeichnet, an welcher an einer Kante ein elastisches im Wesentlichen U-förmiges Dämpfungselement 2 angeordnet ist. Dieses Dämpfungselement 2 ist als an sich bekanntes Elastomer ausgebildet, das in Plattenform hergestellt und durch eine U-förmige Biegung in eine ebenfalls U-förmige Aufnahme 3 der Tragplatte 1 beispielsweise eingeklebt wird. Eine Profilschiene 4, deren Querschnitt im vorliegenden Ausführungsbeispiel im Wesentlichen kreuzförmig ausgebildet ist, weist mehrstufige Auflageflächen 5, 6, 7, 8 auf, von denen die Auflageflächen 6, 7, 8 zum Abstützen der Profilschiene 4 an Innenwänden 9, 10, 11 und daher zur Dämpfung in mit 12, 13, 14 bezeichneten Richtungen vorgesehen sind. Jede dieser mehrstufigen Auflageflächen 6, 7, 8 weist einen inneren Abschnitt 6a, 7a, 8a auf, der eine erste geringe Federhärte bzw. kleinere Federkonstante (weiche Federung) repräsentiert, sowie einen äußeren Abschnitt 6b, 7b, 8b, welcher eine zweite höhere Federhärte bzw. größere Federkonstante (harte Federung) darstellt, wobei die inneren Abschnitte 6a, 7a, 8a jeweils höher angeordnet sind als die äußeren Abschnitte 6b, 7b, 8b.

Im Folgenden wird auf eine Dämpfung in Richtung 12 näher eingegangen. Auftretende Schwingungen bzw. Vibrationen werden in Richtung 12 gedämpft, indem der innere Abschnitt 6a der Auflagefläche 6 der Profilschiene 4 in die Innenseite 9 des Dämpfungselementes 3 bis zu einer Eindringtiefe 15 eindringt. Dies bedeutet, dass bis zu dieser Eindringtiefe 15 die erste geringe Federhärte wirkt, welche das Dämpfungsverhalten im Hinblick auf Schwingungen bzw. Vibrationen bestimmt. Im Falle einer Schockbelastung dringt zusätzlich der äußere Abschnitt 6b zumindest teilweise in die Innenseite 9 des Dämpfungselementes 3 ein, was bedeutet, dass in diesem Fall die im Vergleich zur ersten Federhärte zweite, höhere Federhärte und somit eine höhere Dämpfung bewirkt wird.

Ein Übergang 16 von dem inneren Abschnitt 6a zu dem äußeren Abschnitt 6b der Auflagefläche 6 ist im Wesentlichen kehlförmig ausgerundet. Diese kehlförmige Ausrundung bzw. der Radius dieser Ausrundung repräsentiert einen "weichen" Übergang zwischen der ersten und der zweiten Federhärte.

In der beschriebenen Art und Weise wirken die inneren Abschnitte 7a, 8a und die äußeren Abschnitte 7b, 8b auf die Innenseiten 10, 11 und dämpfen Schwingungs- und Schockbelastungen in die Richtungen 13 und 14.

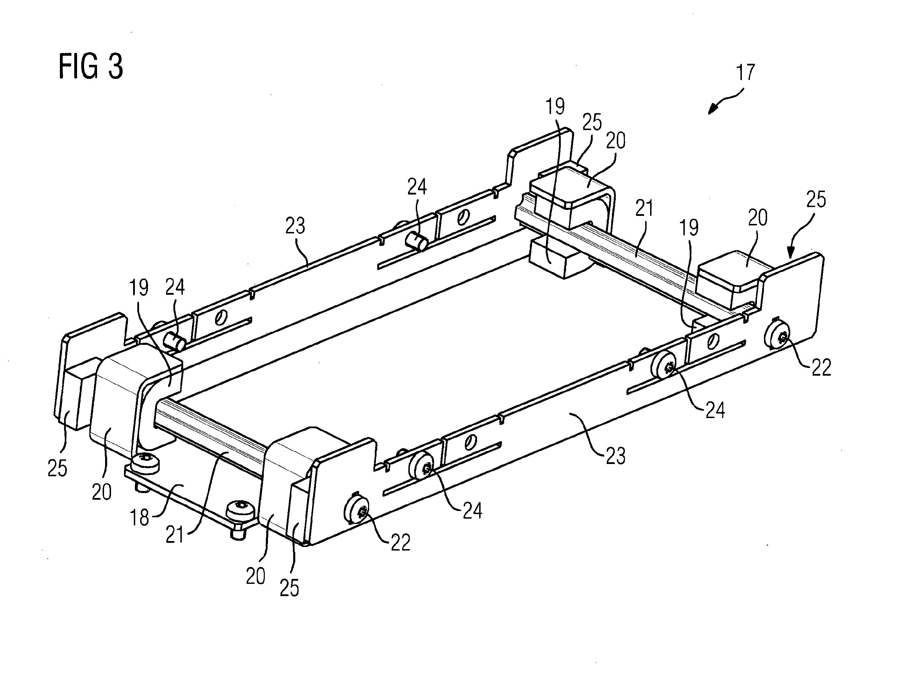

Im Folgenden wird auf Figur 3 verwiesen, in welcher ein Halter 17 zur Aufnahme und Halterung eines hier nicht dargestellten Speicherlaufwerks gezeigt ist. Dieser Halter 17, welcher in einen dafür vorgesehenen Einbauplatz eines Industrie-PCs montiert werden kann, weist eine Tragplatte 18 auf, die an zwei gegenüberliegenden Kanten mit jeweils zwei U-förmigen Dämpfungselementen 19 versehen ist. Diese Dämpfungselemente 19 sind in ebenfalls U-förmigen Aufnahmen 20 der Tragplatte 18 angeordnet, wobei die jeweils zwei Dämpfungselemente 19 einer Kante zum Aufnehmen und Abstützen einer Profilschiene 21 vorgesehen sind. Der Querschnitt dieser Profilschienen und die mehrstufigen Auflageflächen sind in der beschriebenen Art und Weise im Wesentlichen kreuzförmig ausgebildet. Selbstverständlich ist es möglich, für jede der beiden Kanten lediglich ein Dämpfungselement vorzusehen, dessen Breite und dadurch dessen Auflagefläche für die Profilschiene in diesem Fall größer zu wählen ist. Mittels Schraubverbindungen 22 sind an den Profilschienen 21 Seitenwände 23 rechtwinklig zur Tragplatte 18 befestigt, die zum Befestigen eines Speicherlaufwerks vorgesehen sind. Das Speicherlaufwerk wird dazu zwischen den Seitenwänden 23 angeordnet und mittels Schrauben 24 an diesen Seitenwänden 23 befestigt, wobei das Speicherlaufwerk geeignete Gewindebohrungen aufweist, in welche die Schrauben 24 eingreifen. Zwischen den Seitenwänden 23 und den Dämpfungselementen 19 sind weitere Dämpfungselemente 25 vorgesehen, welche in axialer Richtung der Profilschienen 21 ein gutes Dämpfungsverhalten sowohl im Rahmen einer Schwingungs- als auch einer Schockbelastung bewirken.

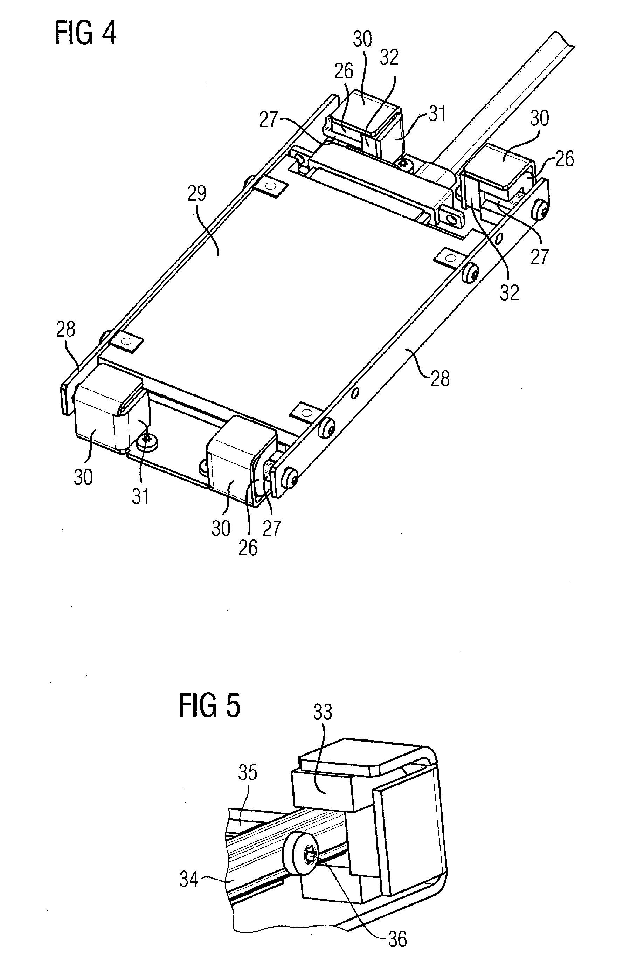

Figur 4 zeigt eine Ausführungsform eines Halters, dessen Tragplatte an zwei gegenüberliegenden Kanten ebenfalls mit jeweils zwei U-förmigen Dämpfungselementen 26 versehen ist. Im Unterschied zur Ausgestaltung des Halters gemäß Figur 3 ist allerdings jedes dieser Dämpfungselemente 26 zum Aufnehmen und Abstützen jeweils einer Profilschiene 27 vorgesehen. An diese vier Profilschienen 27 sind wiederum Seitenwände 28 angeschraubt, an welchen ein Speicherlaufwerk 29 mittels Schrauben befestigt ist. Die Dämpfungselemente 26 sind auch hier in U-förmigen Aufnehmungen 30 angeordnet, wobei im vorliegenden Beispiel diese Aufnehmungen 30 jeweils ein Seitenteil 31 aufweisen. Zwischen dem jeweiligen Seitenteil 31 und dem jeweiligen Dämpfungselement 26 ist ein weiteres Dämpfungselement 32 angeordnet, wobei die gegenüberliegenden Dämpfungselemente 32 einer Kante ein gutes Dämpfungsverhalten im Rahmen einer Schwingungs- als auch einer Schockbelassung des Speicherlaufwerks 29 in axialer Richtung der Profilschienen 27 bewerkstelligen.

Selbstverständlich ist es möglich, das Speicherlaufwerk 29 direkt an den Profilschienen 27 zu befestigen, wodurch auf die Seitenwände 28 verzichtet werden kann. In diesem Zusammenhang wird auf Figur 5 verwiesen, in welcher der Einfachheit halber lediglich ein Dämpfungselement 33 mit einer in diesem Dämpfungselement 33 angeordneten Profilschiene 34 dargestellt ist. Es ist angedeutet, dass an dieser Profilschiene 34 ein Speicherlaufwerk 35 mittels einer Schraubverbindung 36 befestigt ist.

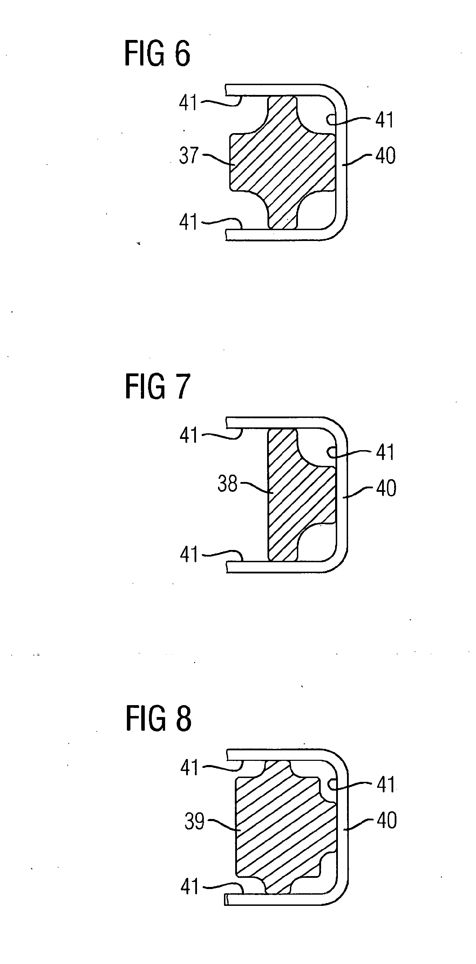

Die Figuren 6 bis 8 zeigen weitere Profilschienen 37, 38, 39 mit unterschiedlichen Querschnitten. Diese Profilschienen 37, 38, 39 weisen jeweils mehrstufige Auflageflächen auf und sind in U-förmigen Dämpfungselementen 40 angeordnet. Die mehrstufigen Auflageflächen bewirken im Hinblick auf Schwingungsund Schockbelastungen jeweils ein sehr gutes Dämpfungsverhalten in Richtung der jeweiligen Innenwände 41 dieser U-förmigen Dämpfungselemente 40.

### Die Erfindung lässt sich kurz wie folgt darstellen:

Es wird ein Halter 17 zur Aufnahme und Halterung einer schwingungs- und/oder schockempfindlichen Komponente 29, 35 geschaffen, welcher sich durch ein gutes Dämpfungsverhalten sowohl im Rahmen einer Schwingungs- als auch einer Schockbelastung auszeichnet. Der Halter 17 ist mit einer Tragplatte 1, 18 versehen, wobei die Tragplatte 1, 18 an zwei gegenüberliegenden Kanten mindestens jeweils ein Dämpfungselement 2, 19, 26, 40 zum Abstützen einer Profilschiene 4, 21, 27, 34, 37, 38, 39 aufweist. Zum Abstützen der Profilschiene 4, 21, 27, 34, 37, 38, 39 an einer Innenseite 9, 10, 11, 41 des jeweiligen Dämpfungselements 2, 19, 26, 40 ist die Profilschiene 4, 21, 27, 34, 37, 38, 39 mit einer mehrstufigen Auflagefläche 6, 7, 8 versehen, wobei ein Teil 6a, 7a, 8a der Auflagefläche 6, 7, 8 höher angeordnet ist als die übrige Auflagefläche 6b, 7b, 8b. Ferner sind die Profilschienen 4, 21, 27, 34, 37, 38, 39 zum Befestigen der Komponente 29, 35 oder von Seitenwänden 23, 28 vorgesehen, die jeweils im Wesentlichen rechtwinklig zur Tragplatte 1, 18 angeordnet und zum Befestigen der Komponente 29, 35 ausgebildet sind.

## Patentansprüche

1. Halter zur Aufnahme und Halterung einer schwingungsund/oder schockempfindlichen Komponente (29, 35), mit einer Tragplatte (1, 18), wobei
- die Tragplatte (1, 18) an zwei gegenüberliegenden Kanten mindestens jeweils ein Dämpfungselement (2, 19, 26, 40) zum Abstützen jeweils einer Profilschiene (4, 21, 27, 34, 37, 38, 39) aufweist,
- zum Abstützen der jeweiligen Profilschiene (4, 21, 27, 34, 37, 38, 39) an einer Innenseite (9, 10, 11, 41) des jeweiligen Dämpfungselements (2, 19, 26, 40) die jeweilige Profilschiene (4, 21, 27, 34, 37, 38, 39) mit einer mehrstufigen Auflagefläche (6, 7, 8) versehen ist,
- die Profilschienen (4, 21, 27, 34, 37, 38, 39) zum Befestigen der Komponente (29, 35) oder von Seitenwänden (23, 28) vorgesehen sind, die jeweils im Wesentlichen rechtwinklig zur Tragplatte (1, 18) angeordnet und zum Befestigen der Komponente (29, 35) ausgebildet sind,
**dadurch gekennzeichnet, dass** ein innerer Abschnitt (6a, 7a, 8a) der Auflagefläche (6, 7, 8) höher angeordnet ist als die übrige Auflagefläche (6b, 7b, 8b), wobei eine Dämpfung in eine Richtung (12) senkrecht zur Auflagefläche (6) bewirkt wird, indem der innere Abschnitt (6a, 7a, 8a) in die Innenseite (9) des Dämpfungselementes (2, 19, 26, 40) bis zu einer Eindringtiefe (15) eindringt.

2. Halter nach Anspruch 1, **dadurch gekennzeichnet, dass** der Bereich eines Übergangs (16) von dem Teil (6a) der Auflagefläche (6, 7, 8) zu der übrigen Auflagefläche (6b, 7b, 8b) im Wesentlichen kehlförmig ausgerundet ist.

3. Halter nach Anspruch 1 oder 2, **dadurch gekennzeichnet, dass** der Querschnitt der jeweiligen Profilschiene (4, 21, 27, 34, 37, 38, 39) im Wesentlichen T-förmig ausgebildet ist.

4. Halter nach Anspruch 1 oder 2, **dadurch gekennzeichnet, dass** der Querschnitt der jeweiligen Profilschiene (4, 21, 27, 34, 37, 38, 39) im Wesentlichen kreuzförmig ausgebildet ist.

5. Halter nach einem der Ansprüche 1 bis 4, **dadurch gekennzeichnet, dass**
- die Dämpfungselemente (2, 19, 26, 40) im Wesentlichen Uoder C-förmig ausgebildet sind und
- jede der Profilschienen (4, 21, 27, 34, 37, 38, 39) mehrere mehrstufige Auflageflächen (6, 7, 8) aufweist, die jeweils zum Abstützen an einer der Innenseiten (9, 10, 11, 41) des jeweiligen Dämpfungselements (2, 19, 26, 40) vorgesehen sind.

## Claims

1. Holder for receiving and securing a vibration- and/or shock-sensitive component (29, 35), with a supporting plate (1, 18), wherein
- the supporting plate (1, 18) has at each of two opposite edges at least one damping element (2, 19, 26, 40) for respectively supporting a profiled rail (4, 21, 27, 34, 37, 38, 39),
- for supporting the respective profiled rail (4, 21, 27, 34, 37, 38, 39) on an inner side (9, 10, 11, 41) of the respective damping element (2, 19, 26, 40), the respective profiled rail (4, 21, 27, 34, 37, 38, 39) is provided with a multi-level bearing surface (6, 7, 8),
- the profiled rails (4, 21, 27, 34, 37, 38, 39) are intended for fastening the component (29, 35) or side walls (23, 28), which are respectively arranged substantially at right angles to the supporting plate (1, 18) and are designed for fastening the component (29, 35),
- **characterized in that** an inner portion (6a, 7a, 8a) of the bearing surface (6, 7, 8) is arranged higher than the rest of the bearing surface (6b, 7b, 8b), a damping being brought about in a direction (12) perpendicular to the bearing surface (6), **in that** the inner portion (6a, 7a, 8a) penetrates into the inner side (9) of the damping element (2, 19, 26, 40) to a depth of penetration (15).

2. Holder according to Claim 1, **characterized in that** the region of a transition (16) from the part (6a) of the bearing surface (6, 7, 8) to the rest of the bearing surface (6b, 7b, 8b) is hollowed substantially in the form of a fillet.

3. Holder according to Claim 1 or 2, **characterized in that** the cross section of the respective profiled rail (4, 21, 27, 34, 37, 38, 39) is of a substantially T-shaped form.

4. Holder according to Claim 1 or 2, **characterized in that** the cross section of the respective profiled rail (4, 21, 27, 34, 37, 38, 39) is of a substantially cross-shaped form.

5. Holder according to one of Claims 1 to 4, **characterized in that**
- the damping elements (2, 19, 26, 40) are of a substantially U-shaped or C-shaped form and
- each of the profiled rails (4, 21, 27, 34, 37, 38, 39) has a number of multi-level bearing surfaces (6, 7, 8), which are respectively intended for supporting on one of the inner sides (9, 10, 11, 41) of the respective damping element (2, 19, 26, 40).

## Revendications

1. Support de réception et de maintien d'un composant ( 29, 35 ) sensible aux oscillations et/ou aux chocs comprenant un plateau ( 1, 18 ) porteur, dans lequel
- le plateau ( 1, 18 ) porteur a, sur deux bords opposés, au moins respectivement un élément ( 2, 19, 26, 40 ) d'amortissement pour l'appui respectivement d'un rail ( 4, 21, 27, 34, 37, 38, 39 ) profilé,
- pour l'appui du rail ( 4, 21, 27, 34, 37, 38, 39 ) profilé respectif sur un côté ( 9, 10, 11, 41 ) intérieur de l'élément ( 2, 19, 26, 40 ) d'amortissement respectif, le rail ( 4, 21, 27, 34, 37, 38, 39 ) profilé respectif est pourvu d'une surface ( 6, 7, 8 ) d'application à plusieurs gradins,
- les rails ( 4, 21, 27, 34, 37, 38, 39 ) sont prévues pour la fixation du composant ( 29, 35 ) ou de parois ( 23, 28 ) latérales, qui sont disposées respectivement sensiblement à angle droit avec le plateau ( 1, 18 ) porteur et qui sont constituées pour la fixation du composant ( 29, 35 ),
**caractérisé en ce qu'**une partie ( 6a, 7a, 8a ) intérieure de la surface ( 6, 7, 8 ) d'application est disposée plus haute que les autres surfaces ( 6b, 7b, 8b ) d'application, un amortissement étant provoqué dans une direction ( 12 ) perpendiculaire à la surface ( 6 ) d'application par le fait que la partie ( 6a, 7a, 8a ) intérieure pénètre dans le côté ( 9 ) intérieur de l'élément ( 2, 19, 26, 40 ) d'amortissement jusqu'à une certaine profondeur ( 15 ) de pénétration.

2. Support suivant la revendication 1, **caractérisé en ce que** la zone d'une transition ( 16 ) de la partie ( 6a ) de la surface ( 6, 7, 8 ) d'application aux autres surfaces ( 6b, 7b, 8b ) d'application est arrondie sensiblement en forme de gorge.

3. Support suivant la revendication 1 ou 2, **caractérisé en ce que** la section transversale du rail ( 4, 21, 27, 34, 37, 38, 39 ) profilé respectif est sensiblement en forme de T.

4. Support suivant la revendication 1 ou 2, **caractérisé en ce que** la section transversale du rail ( 4, 21, 27, 34, 37, 38, 39 ) profilé respectif est sensiblement en forme de croix.

5. Support suivant l'une des revendications 1 à 4, **caractérisé en ce que**
- les éléments ( 2, 19, 26, 40 ) d'amortissement sont sensiblement en forme de U ou en forme de C et
- chacun des rails ( 4, 21, 27, 34, 37, 38, 39 ) profilé a plusieurs surfaces ( 6, 7, 8 ) d'application à plusieurs gradins qui sont prévues respectivement pour l'appui sur l'un des côtés ( 9, 10, 11, 41 ) intérieurs de l'élément ( 2, 19, 26, 40 ) d'amortissement respectif.
